Europäisches Patentamt

European Patent Office

Office européen des brevets

(19)

(11) Veröffentlichungsnummer: **0 302 067**

**B1**

(12) **EUROPÄISCHE PATENTSCHRIFT**

(45) Veröffentlichungstag der Patentschrift: **25.07.90**

(51) Int. Cl.⁵: **A 21 B 3/04**

(21) Anmeldenummer: **87902306.7**

(22) Anmeldetag: **15.04.87**

(86) Internationale Anmeldenummer:
**PCT/AT87/00028**

(87) Internationale Veröffentlichungsnummer:
**WO 87/06101 22.10.87 Gazette 87/23**

(54) **BACKOFEN.**

(30) Priorität: **18.04.86 AT 1038/86**

(43) Veröffentlichungstag der Anmeldung:
**08.02.89 Patentblatt 89/06**

(45) Bekanntmachung des Hinweises auf die
Patenterteilung:
**25.07.90 Patentblatt 90/30**

(84) Benannte Vertragsstaaten:
**DE FR GB IT SE**

(56) Entgegenhaltungen:
**AT-B- 378 469**
**DE-A-2 857 125**
**FR-A-2 484 200**

(73) Patentinhaber: **König, Helmut, jr.**
**Rotmoosweg 15**
**A-8045 Graz (AT)**

(72) Erfinder: **König, Helmut, jr.**
**Rotmoosweg 15**
**A-8045 Graz (AT)**

(74) Vertreter: **Brauneiss, Leo et al**
**Patentanwälte Dipl.-Ing. Leo Brauneiss, Dipl.-Ing. Dr. Helmut Wildhack Strohgasse 10**
**A-1030 Wien (AT)**

EP 0 302 067 B1

**Beschreibung**

Die Erfindung bezieht sich auf einen Backofen mit einem durch eine Türe zugänglichen Backraum, in den ein das Backgut tragender, während des Backprozesses stillstehender Wagen einbringbar ist, mit zwei seitlich des Backraumes zu dessen beiden Seiten über die wirksame Backraumhöhe durchlaufenden Luftkanälen, deren jeder von Backruam durch eine mit einer Vielzahl von Luftdruchtrittsöffnungen versehene Zwischenward getrennt ist, welche Luftkanäle während des Backprozesses von einem Gebläse über eine Umschalteinrichtung alternierend mit Heißluft versorgt werden, die von einer Heizung erwärmt und von einer Beschwadungseinrichtung befeuchtet wird, den Backraum in alternierender Richtung quer durchströmt und danach wieder zur Saugseite des Gebläses im Kreislauf zurückgesaugt wird, wobei das Gebläse und die Heizung höher als der Backraum und zumindest zum teil über diesem angeordnet sind.

Ein derartiger Backofen ist bekannt (AT—PS 326 063) und hat den Vorteil, daß bei geringer Backofenbreite ein gleichmäßige Beaufschlagung des Backgutes durch die in alternierender Richtung, jedoch stets im wesentlichen horizontal durch den Backraum strömende Heißluft erzielt wird. Bei der bekannten Konstruktion ist jedoch ein gewisser Nachteil dadurch gegeben, daß die Beschwadungseinrichtung in unteren seitlichen Nischen des Backraumes angeordnet ist und daher einer gesonderten Heizung bedarf, um zur Schwadenerzeugung wirksam werden zu können. Die Erfindung setzt sich zur Aufgabe, diese Nachteile zu vermeiden und einen Backofen der eingangs geschilderten Art so zu verbessern, daß bei Beibehaltung der Vorteile der zuvor erwähnten bekannten Konstruktion eine wirksame und energiesparende Beschwadung erzielt wird. Die Erfindung löst diese Aufgabe dadurch, daß zur Abfuhr der aus dem Backraum austretenden Luft unten im Backraum eine Absaugeöffnung angeordnet ist, durch welche die zur Saugseite des Gebläses in einen Rückströmkanal strömende Luft zu der auf der Höhe des Backraumes angeordneten Beschwadungseinrichtung gelangt, und daß der Rückströmkanal von der Beschwadungseinrichtung über die höher als diese angeordnete Heizung zum Gebläse führt. Dadurch wird die Beschwadungseinrichtung von der aus dem Backraum abströmenden Warmluft erwärmt und zugleich wird eine wirksame Befeuchtung dieser Luft durch den in der Beschwadungseinrichtung erzeugten Dampf sichergestellt, der laufend von der Beschwadungseinrichtung durch die an dieser vorbeistreichende, im Kreislauf geführte Luft abgeführt und daher wirksam mit der Backraumatmosphäre vermischt wird. Da die Beschwadungseinrichtung, insbesondere wenn sie über einen Großteil der Backraumhöhe reicht, sehr wirksam ist, jedoch — in Breitenrichtung des Backofens gemessen — nur sehr wenig Platz erfordert, wird die Gesamtbreite des Backofens gegenüber der eingangs geschilderten bekannten Konstruktion auch dann nur unwesentlich verbreitert, wenn die Beschwadungseinrichtung seitlich des Backraumes angeordnet ist, zumal das Grundkonzept, nämlich Anordnung der Heizung und des Gebläses zumindest teilweise, vorzugsweise zum Großteil oder zur Gänze, oberhalb des Backraumes bzw. der ihn mit Warmluft versorgenden Luftkanän, beibehalten wird. Vorzugsweise erstreckt sich die Beschwadungseinrichtung über einen Großteil der Höhe des Backraumes, was ihre Wirksamkeit erhöht.

Im Rhamen der Erfindung ist es besonders vorteilhaft, die Absaugöffnung an der tiefsten Stelle des Backraumes anzuordnen.

Gemäß einer bevorzugten Ausführungsform der Erfindung hat die Beschwadungseinrichtung eine parallele zur Backraumwand angeordnete Platte, an der mehrere geneigt verlaufende Rinnen für Wasser angeordnet sind, wobei diese Platte an ihrer Vorder- und Rückseite von der durch die Absaugöffnung zugeführten Luft umströmt ist. Eine derartige Konstruktion der Beschwadungseinrichtung ist gerade bei der erfindungsgemäßen Konstruktion besonders vorteilhaft, da eine hohe Wirksamkeit der Beschwadung bei geringem Platzbedarf in Richtung der Breite des Backofens erzielt wird.

Gemäß einer Weiterbildung der Erfindung liegt an einer Seite der Beschwadungseinrichtung, vorzugsweise an der dem Backraum abgewandten Seite, ein Rauchgaskanal an, der von der Heizung nach unten zu einer auf der Höhe des untersten Bereiches der Beschwadungseinrichtung, vorzugsweise an deren tiefster Stelle, angeordneten Rauchgasabfuhröffnung führt. Auf diese Weise wird auch die Wärme der Abgase der Heizung, welche eine Öl- oder Gasheizung sein kann, zur Schwandenerzeugung ausgenützt, was sich insbesondere bei der Anheizung des Ofens bzw. bei der erstmaligen Erzeugung der Schwadenatmosphäre vorteilhaft auswirkt. Die Anordnung des Ruachgaskanales an der dem Backruam abgewandten Seite der Beschwadungseinrichtung erleichtert die Einführung der Rauchgase in die Rauchgasabfuhröffnung, da auf diese Weise der Rauchgaskanal nicht tiefer reichen muß als der Unterrand der Beschwadungseinrichtung. Um einen möglichst intensiven Wärmeübergang von den Rauchgasen auf die Platte der Beschwadungseinrichtung zu erzielen, verläuft erfindungsgemäß der Rauchgaskanal mäanderförmig entlang der Platte der Beschwadungseinrichtung.

Diese Anordnung kann auch dazu ausgenutzt werden, die Backraumatomosphäre, wenn dies gewünscht ist, aud dem Backraum in dem Kamin auszutreiben. Hiezu ist erfindungsgemäß die Anordnung so getroffen, daß vom Rückströmkanal, vorzugesweise in oder kurz nach der Absaugeöffnung, ein durch ein Verschlußorgan abschließbarer Kanal abzweigt, der in den Rauchgaskanal, vorzugsweise an einer von der Rauchgasabfuhröffnung entfernte Stelle, mündet. Normalerweise ist dieses Verschlußorgan geschlossen, so daß der eingangs erwähnte Luftstromkreislauf aufrecht erhalten bleibt. Wenn aber in den Backraum in an sich bekannter Weise Frischluft eingeleitet wird, dann wird das Verschlußorgan geöffnet und es wird der Abzug der Backraumatmosphäre aus dem Backraum in den Kanal freigegeben. Die Andordnung der Einmündung dieses Kanals an einer von der Rauchgasabfuhröffnung entfernten Stelle in den Rauchgaskanal hat den Vorteil, daß die feuchte Luft getrocknet wird, bevor sie in den Kamin gelangt, so daß eine Versottung des Kamines vermieden wird. Die Öffnung des Verschlußorganes kann automatisch erfolgen, z.B. durch den Überdruck, welcher im Backraum durch die Einleitung von Frischluft erzeugt wird, und hiezu kann erfindungsgemäß in der Abzweigstelle eine gewichtsbelastete Klappe als Verschlußorgan angeordnet sein.

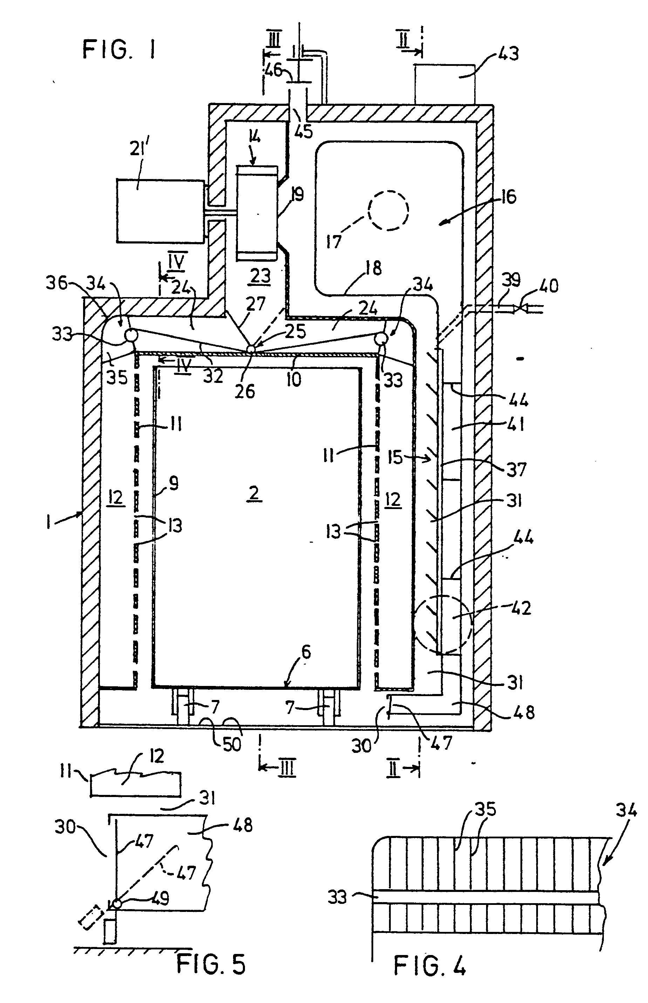

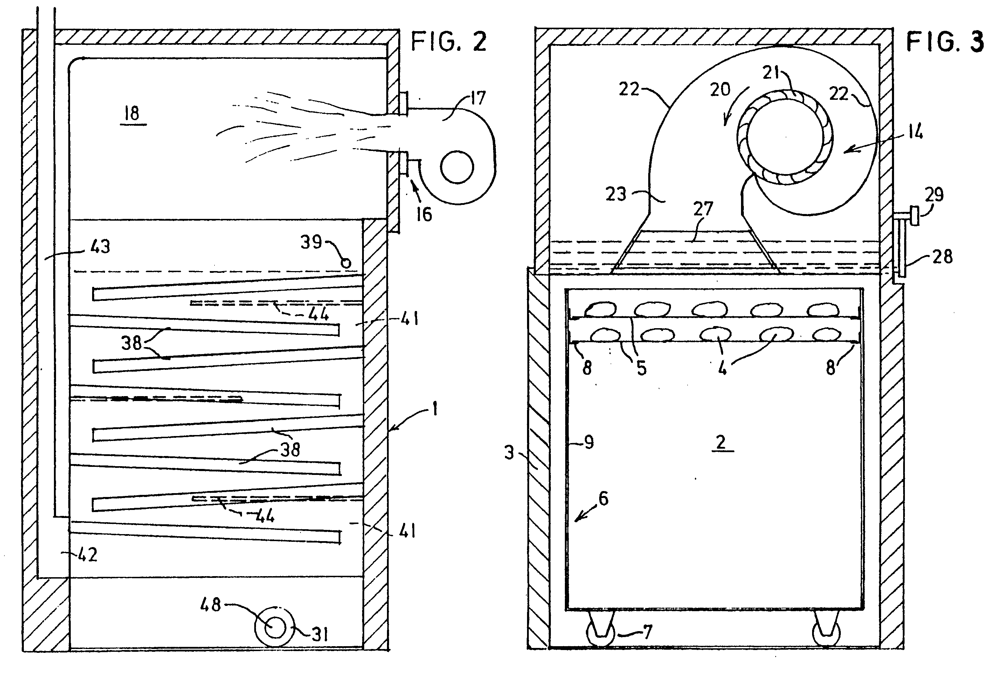

In der Zeichnung ist der Erfindungsgegenstand an Hand von Ausführungsbeispielen schematisch dargestellt. Fig. 1 zeigt einen Vertikalschnitt durch den Backofen. Die Fig. 2 und 3 sind Schnitte nach den Linien II—II bzw. III—III der Fig. 1. Fig. 4 ist ein Schnitt nach der Linie IV—IV der Fig. 1 in größerem Maßstab. Die Fig. 5 zeigt ein Detail der Fig. 1 in größerem Maßstab.

Der Backofen nach Fig. 1 hat ein wärmisolierendes Gehäuse 1, in welchem ein begehbarer Backraum 2 vorgesehen ist, der durch eine Türe (Fig. 3) zugänglich ist und in den auf eine Bodenplatte 50 ein das Backgut 4 auf Auflagen 5, insbesondere Backblechen, tragender Wagen 6 auf Rädern 7 einfahrbar ist. Dieser Wagen 67 ist zur Gänze aus dem Backraum 2 ausfahrbar, von Backofen trennbar und gegen einen anderen Wagen austauschbar. Jeder Wagen 6 paßt in den Backraum 2 mit geringem seitlichen und oberen Spiel hinein. Die Auflagen 5 ruhen auf Winkelschienen 8 auf, die von seitlichen Stehern 9 des Wagens 6 getragen werden. Der Backraum 2 ist oben durch eine Deckwand 10 luftdicht abgeschlossen, ebenso, in Einschubrichtung des Wagens 6 gesehen, an seiner Hinterwand. Die beiden Seitenwände des Backraumes 2 sind über dessen wirksame Höhe (das ist jene Höhe, über welche das Backgut 4 tragende Auflagen 5 am Wagen 6 angeordnet sind) von Zwischernwänden 11 begrenzt, hinter denen vertikal über die gesamte wirksame Höhe des Backraumes 2 durchlaufende Luftkanäle 12 liegen, deren Tiefe, gemessen in Einschubrichtung des Wagens 6, gleich ist der in gleicher Richtung gemessenen Tiefe des Backraumes 2. Aus diesen Luftkanälen tritt die Luft durch Luftdurchtrittsöffnungen 13 in alternierender Richtung in den Backraum 2 ein, was später noch näher beschrieben wird. Die Luftdurchtrittsöffnungen 13 sind vorzugsweise schmale Schlitze, die über die Tiefe des Backraumes 2 durchlaufen. Zweckmäßig sind die Auflagen 5 des Wagens 6 so angeordnet, daß jede Auflage etwas höher liegt als eine der schlitzförmigen Luftdurchtrittsöffnungen 13. Etwas unterhalb der jeweiligen Öffnung 13 hat der Wagen 6 ein horizontales Leitblech, welches zusammen mit der über ihm befindlichen Auflage einen Kanal für die durch die jeweilige Luftdurchtrittsöffnung 13 in den Backraum 2 eingeblasene Luft bildet, welcher Kanal diese Luft gegen die Mitte des Wagens 6 bzw. des Backraumes 2 hin leitet. Solche Kanäle sind in der veröffentlichten internationalen Patentanmeldung WO 86/01077 beschrieben.

Den zu beiden Seiten des Backraumes 2 angeordneten Luftkanälen 12 wird heiße, feuchte Luft von einem Gebläse 14 zugeführt, welches oberhalb des Backraumes 2 angerdnet ist. Die von diesem Gebläse 14 angesaugte Luft wird von einer Beschwadungseinrichtung 15 befeuchtet und von einer Heizung 16 erwärmt. Im dargestellten Auführungsbeispiel hat die Heizung 16 einen oben am Gehäuse 1 an dieses angelfanschten Öl- oder Gasbrenner 17 (Fig. 2), dessen Flamme in ein Flammrohr 18 eines üblichen Heizregisters eintritt, welches von der vom Gebläse 14 durch dessen Ansaugstutzen 19 (Fig. 1) angesaugten Luft umspült wird. Statt eines slochen Brenners 17 und des zugehörighen Flammrohres 18 kann auch ein in üblicher Weise ausgebildetes elektrisches Heizregister, bestehend aus mehreren parallelen Heizstäben, treten, die von der aufzuwärmenden Luft umspült werden. Die Heizung 16 liegt zumindest zum Teil über dem Backraum 2 bzw. den beiden Luftkanälen 12 und ebenfalls zumindest teilweise über der Beschwadungseinrichtung 15.

Die vom Gebläse 14 durch dessen Ansaugstutzen 19 angesaugte Luft wird vom Rotor 21 des Gebläses verwirbelt, der stets in der gleichen Richtung (Pfeil 20, Fig. 3) von einem am Gehäuse 1 angeflanschten Motor 21' angetrieben wird. Die Luft wird vom spiralförmig geformten Mantel 22 des Gebläses 14 in einen vertikalen, vom Gebläseauslaßstutzen gebildeten, kurzen Kanal 23 geleitet, welcher vertikal gegen die Deckwand 10 des Backraumes zu gerichtet ist und auf die Mitte dieser Deckwand 10 trifft. Von diesem Kanal 23 zweigen nach den beiden Seiten des Backofens gerichtete, zu den beiden Luftkanälen 12 führende Luftzufuhrkanäle 24 ab, die oberhalb der Deckwand 10 des Backraumes 2 verlaufen und von einer Umschalterinrichtung 25 alternierend mit Heißluft beschickt werden. Heizu hat die Umschalteinrichtung 25 eine um eine horizontale, in Einschubrichtung des Wagens 6 verlaufende Achse 26 schwenkbare Luftumlenkklappe 27, die derart an der Einmündungsstelle des Kanales 23 in die bieden Luttzufuhrkanäle 24 angeordnet ist, daß sie zwischen zwei Grenzlagen verschwenkbar ist, deren eine in Fig. 1 mit vollen Linien dargestellt ist, wogegen die andere strichliert gezeichnet ist. In der mit vollen Linien gezeichneten Grenzlage sperrt die Luftumlenkklappe 27 den in Fig. 1 links dargestellten Luftzufuhrkanal 24 ab, in der anderen Grenzlage den in Fig. 1 rechts liegenden Luftzufuhrkanal 24. In jeder der beiden Grenzlagen liegt die von einem ebenen Blech gebildete Klappe 27 um etwa 45° geneigt, so daß eine möglichst sanfte Umlenkung der durch den vertikalen Kanal 23 zuströmenden Luft in den jeweils wirksamen horizontalen Luftzufuhrkanal 24 erzielt wird. Der Querschnitt des Kanales 23 erweitert sich, in Einschubrichtung des Wagens 6 gemessen, von oben nach unten, insbesondere in jenem Bereich, in welchem die Klappe 27 angeordnet ist (Fig. 3), wobei diese Klappe 27 trapezförmig und um ihre breitere Basis des Trapezews schwenkbar ist. Die Achse 26 ist als Welle ausgebildet, auf welcher die Klappe 27 fix befestigt ist. Diese Welle ist aus dem Gehäuse abgedichtet herausgeführt und mit einem Hebel 28 (Fig. 3) verbunden, der von einem Getriebemotor 29 in rhythmischen Intervallen, z.B. alle 30 Sekunden, umgeschaltet wird, so daß alle 30 Sekunden die Klappe 27 in die jeweils andere Grenzlage verstellt und dadurch die Durchströmungsrichtung des Backraumes 2 geändert wird. Der Backraum 2 wird annähernd horizontal von der Warmluft durchströmt, welche an der tiefsten Stelle des Backraumes 2 durch eine Absaugöffnung 30 hindurch aus dem Backraum abgesaugt und in einen Rückströmkanal 31 geleitet wird, in welchem die Beschwadungseinrichtung 15 angeordnet ist, die somit von der aus dem Backraum 2 austretenden Luft umspült wird. Von dort gelangt die Luft über die Heizung 16 zum Gebläse 14 zurück, wodurch ein geschlossener Kreislauf für die Backluft vorliegt.

Das vom Mantel 22 gebildete Gehäuse des von einem Umwälzventilator gebildeten Gebläses 14 ist schneckenförmig ausgebildet und an seiner Übergangsstelle in den Kanal 23 nur einen Bruchteil der Backofentiefe breit. Auch der Kanal 23 soll, wenn ein zu großer Druckabfall in ihm vermieden werden soll, sich nicht auf die gesamte Tiefe des Backraumes verbreitern. Um nun die über die gesamte Backraumtiefe reichenden Luftkanäle 12 gleichmäßig mit Heißluft beschicken zu können, verbreitert sich jeder Luftzuführungskanal 24 kontinvierlich in Richtung zum Luftkanal 12, bis er an der Übergangsstelle in diesen die gesamte, in Einschubrichtung des Wagens 6 gemssene Backraumtiefe erreicht hat. Um zu vermeiden, daß dadurch im Luftzuführungskanal 24 ein starker Druckabfall auftritt, ist die Bodenwand 32 jedes Luftzuführungskanales 24 gegen die Achse 26 zu geneigt, wobei das höhere Ende der Bodenwand an einem horizontalen Rohr 33 abgestützt ist. Dieses Rohr 33 trägt zugleich eine über die Ecke des Backraumes angeordnete Einrichtung 34 zur Vergleichmäßigung der Luftströmung. Diese Einrichtung 34 hat eine Vielzahl vertikaler Lamellen 35 (Fig. 1, 4), die am Rohr 33 in gleichmäßigen Abständen voneinander parallel zueinander befestigt sind und deren Ebenen in Richtung der Luftströmung gerichtet sind. Die äußeren Ränder dieser Lamellen 35 liegen an den abgerundeten Ecken 36 des Gehäuses 1 an. Diese Einrichtung 34 bildet einen Luftstromgleichrichter, welcher die durch die düsenartige Wirkung des Luftzuführungskanales 24 in den Luftstrom eingebrachten Luftwirbel weitgehend beseitigt und zugleich die Luft in die richtige Richtung, nämlich senkrecht nach unten, umlenkt. Da diese Anordnung, ebenso wie die gesamte für den Backraum 2 maßgebende Luftführung, symmetrisch zur Vertikalachse des Backraumes 2 ist, ergeben sich für beide Richtungen der den Backraum 2 in alternierender Richtung durchströmenden Backluft gleiche Verhältnisse.

Die im Rückströmkanal 31 angeordnete Beschwadungseinrichtung 15 liegt auf der Höhe des Backraumes 2 und hat eine flache Platte 37, die parallel zur benachbarten Zwischenwand 11 angeordnet ist und an der dieser Zwischenwand 11 zugewendeten Seite mehrere geneigt verlaufende Rinnen 38 trägt, die aus auf die Platte 37 aufgeschweißten Schienen bestehen, die wechselweise nach vorne bzw. hinten geneigt sind (Fig. 2). Wenn Dampf in der Backatmosphäre gebraucht wird, wird durch ein Rohr 39 über ein Magnetventil 40 Wasser auf die oberste Rinne 38 zugeführt, wobei das Wasser entlang jeder Rinne 38 bis zu deren unterem Ende läuft und von dort auf die darunterliegende Rinne 36 tropft. Da somit das Wasser entlang eines mäanderförmigen Pfades entlang der Platte 37 läuft, hat es genügend Zeit zur Verdampfung. Die Platte 37 bildet eine Verdampferplatte, welche zusammen mit den Rinnen 38 eine relativ schwere Masse bildet, die in der Aufheizphase aufgeheizt wird. Dies erfoglt einerseits durch die Heißluft des Backofens, welche die Platte 37 an ihren beiden Seiten umströmt, anderseits durch die Wärme der Rauchgase, die in einem Rauchgaskanal 41 (Fig. 1, 2) entlang der Platte 37 geführt sind. Dieser Rauchgaskanal verläuft, vom Flammrohr 18 ausgehend, mäanderförmig an der der Zwischenwand 11 abgewendeten Seite der Platte 37 in Anlage an dieser und führt zu einer auf der Höhe der tiefsten Stelle der Beschwadungseinrichtung 15 angeordneten Rauchgasabfuhröffnung 42, durch welche die Rauchgase in einen in der Rückwand des Backofens angeordneten Abzugskanal 43 strömen, der an den Kamin angeschlossen ist. Die erwähnte mäanderförmige Gestalt des Rauchgaskanales 41 wird durch horizontale Querwände 44 in diesem Kanal gebildet, die nicht über die gesamte Breite des Rauchgaskanales 41 reichen.

Im Unterdruckbereich des Gebläses 14 befindet sich eine Öffnung 45 im Gehäse 1, welche durch einen Deckel 46 dicht verschließbar ist. Besteht die Absicht, den Dampf aus dem Backofen zu entfernen, so wird dieser Deckel 46 durch einen nicht dargestellten Hubmagneten angehoben und dadurch die Öffnung 45 freigegeben. Durch die einströmende Frischluft wird der Dampf bzw. die Warmluft aus dem Backraum 2 verdrängt. Durch den dadurch im Backraum 2 entstehenden Überdruck wird ein von einer gewichtsbelasteten um eine horizontale Achse 49 schwenkbaren Dampfüberdruckklappe gebildetes Verschlußorgan 47 (Fig. 1, 5) geöffnet und dadurch in die in Fig. 5 strichliert dargestellte Öffnungslage gebracht. Das Verschlußorgan 47 ist an der Eintrittsstelle eines Kanales 48 angeordnet, welcher vom Rückströmkanal 31 schon in der Absaugöffnung 30 abzweigt und in den Rauchgaskanal 41 mündet, und zwar an einer Stelle, welche von der Rauchgasabfuhröffnung 42 möglichst weit entfernt ist. Aus Fig. 2 ist ersichtlich, daß diese Einmündungsstelle im Bereiche der Vorderwand des Ofens liegt, wogegen die Rauchgasabfuhröffnung 42 in der Rückwand des Ofens angeordnet ist. Über das gewichtsbelastete Verschlußorgan 47 strömt somit der aus dem Backraum 2 ausgetriebene Dampf entlang eines Teiles der Beschwadungseinrichtung 15 entlang derselben und vermischt sich schließlich mit dem aus dem Flammrohr 18 kommenden Rauchgas, worauf dieses mit dem Dampf zusammen durch die Rauchgasabfuhröffnung 42 in den Rauchfang geleitet wird. Der Vorteil dieses Systems besteht darin, daß der sehr feuchte Dampf vom Rauchgas, vor allem aber von den heißen Wänden der Beschwadungseinrichtung 15 abgetrocknet wird und dadurch eine Versottung des Kamines verhindert wird.

Die Luftumlenkklappe 27 bzw. ihre Betätigungsvorrichtung sind so ausgebildet, daß diese Klappe 27 in einer vertikalen Mittelstellung fixiert werden kann. Die vom Gebläse 14 geförderte Luft strömt dann zu beiden Seiten der Klappe 27 zu gleichen Teilen über die beiden Luftzufuhrkanäle 24 in beide Luftkanäle 12 ein. Dies bewirkt, daß man auch bei geöffneter Türe 3 beide Zwischenwände 11 gleichmäßig aufgeheizt bzw. heiß halten kann.

**Patentansprüche**

1. Backofen mit einem durch eine Türe zugänglichen Backraum (2), in den ein das Backgut tragender, während des Backprozesses stillstehender Wagen (6) einbringbar ist, mit zwei seitlich des Backraumes (2) zu dessen beiden Seiten über die wirksame Backraumhöhe durchlaufenden Luftkanälen (12), deren jeder vom Backraum (2) durch eine mit einer Vielzahl von Luftdurchtrittsöffnungen (13) versehene Zwischenwand (11) getrennt ist, welche Luftkanäle (12) während des Backprozesses von einem Gebläse (14) über eine Umschalteinrichtung (25) alternierend mit Heißluft vorsorgt werden, die von einer Heizung (16) erwärmt und von einer Beschwadungseinrichtung (15) befeuchtet wird, den Backraum (2) in alternierender Richtung quer durchströmt und danach wieder zur Saugseite des Gebläses (14) im Kreislauf zurückgesaugt wird, wobei das Gebläse (14) und die Heizung (16) höher als der Backraum (2) und zumindest zum Teil über diesem angeordnet sind, dadurch gekennzeichnet, daß zur Abfuhr der aus dem Backraum (2) austretenden Luft unten im Backraum (2) eine Absaugöffnung (30) angeordnet ist, durch welche die zur Saugseite des Gebläses (14) in einem Rückströmkanal (31) strömende Luft zu der auf der Höhe des Backraumes (2) angeordneten Beschwadungseinrichtung (15) gelangt, und daß der Rückströmkanal (31) von der Beschwadungseinrichtung (15) über die höher als diese angeordnete Heizung (16) zum Gebläse (14) führt.

2. Backofen nach Anspruch 1, dadurch gekennzeichnet, daß die Absaugeöffnung (30) an der tiefsten Stelle des Backraumes (2) angeordnet ist.

3. Backofen nach Anspruch 1 oder 2, dadurch gekennzeichnet, daß die Beschwadungseinrichtung (15) seitlich des Backraumes (2) angeordnet ist.

4. Backofen nach Anspruch 1, 2 oder 3, dadurch gekennzeichnet, daß die Beschwadungseinrichtung (15) über einen Großteil der Höhe des Backraumes (2) reicht.

5. Backofen nach einem der Ansprüche 1 bis 4, dadurch gekennzeichnet, daß die Beschwadungseinrichtung (15) ein parallele zur Backraumwand angeordnete Platte (37) aufweist, an der mehrere geneigt verlaufende Rinnen (38) für Wasser angeordnet sind und daß diese Platte (37) an ihrer Vorder- und Rückseite von der durch die Absaugöffnung (30) zugeführten Luft umströmt ist.

6. Backofen nach einem der Ansprüche 1 bis 5, dadurch gekennzeichnet, daß an einer Seite der Beschwadungseinrichtung (15), vorzugsweise an der dem Backraum (2) abgewandten Seite, ein Rauchgaskanal (41) anliegt, der von der Heizung (16) nach unten zu einer auf der Höhe des untersten Bereiches der Beschwadungseinrichtung (15), vorzugsweise an deren tiefster Stelle, angeordneten Rauchgasabfuhuröffnung (42) führt.

7. Backofen nach Anspruch 6, dadurch gekennzeichnet, daß der Rauchgaskanal (41) mäanderförmig entlang der Platte (37) der Beschwadungseinrichtung (15) verläuft.

8. Backofen nach Anspruch 6 oder 7, dadurch gekennzeichnet, daß vom Rückströmkanal (31), vorzugsweise in oder kurz nach der Absaugeöffnung (30), ein durch ein Verschlußorgan (47) abschließbarer Kanal (48) abzweigt, der in den Rauchgaskanal (41), vorzugsweise an einer von der Rauchgasabfuhröffnung (42) entfernten Stelle, mündet.

9. Backofen nach Anspruch 8, dadurch gekennzeichnet, daß in der Abzweigstelle eine gewichtsbelastete Klappe als Verschlußorgan (47) angeordnet ist.

10. Backofen nach einem der Ansprüche 1 bis 9, dadurch gekennzeichnet, daß die Deckwand (10) des Backraumes (2) dicht abgeschlossen ist.

**Revendications**

1. Four de boulanger avec, accessible par une porte, un compartiment de four (2) dans lequel peut être introduit un chariot (6) supportant la pâte à cuire, et restant à l'arrêt durant l'opération de cuisson, avec deux canaux d'aération (12) disposés latéralement, par rapport à ce compartiment de cuisson (2) des deux côtés de celui-ci et passant au-dessus du niveau utile de compartiment de four, et séparés chacun du compartiment de four (2) par une cloison intermédiaire (11) pourvue d'une multiplicité d'orifices de passage d'air (13), les dits canaux d'aération (12), durant l'opération de cuisson, étant à partir d'un ventilateur (14) alimentés alternativement en air chaud par l'intermédiaire d'un dispositif inverseur (25), cet air chaud étant chauffé par un moyen de chauffage (16) et humidifié par un dispositif d'exhalaison (15), et balayant transversalement le compartiment de cuisson en direction alternée, et étant ensuite réaspiré dans le circuit au côté aspiration du ventilateur (14), le ventilateur (14) et le moyen de chauffage (16) étant disposés plus haut que la compartiment de cuisson et tout au moins partiellement au dessus de celui-ci, le dit four de boulanger étant caractérisé en ce que pour l'évacuation de l'air sortant du compartiment de cuisson (2), il est prévu dans le bas dans ce compartiment de cuisson (2) un orifice d'aspiration (30), par lequel l'air se débitant dans un canal de retour (31) en direction du côté aspiration du ventilateur (14) parvient au dispositif d'exhalaison (15) installé au niveau du compartiment de cuisson (2), et en ce que la canal de retour (31), à partir du dispositif d'exhalaison (15), conduit jusqu'au ventilateur (14) par l'intermédiaire du moyen de chauffage (16), disposé plus en hauteur que ce dispositif d'exhalaison.

2. Four de boulanger selon la revendication 1, caractérisé en ce que l'orifice d'aspiration (30) est disposé au point le plus bas du compartiment de cuison (2).

3. Four de boulanger selon la revendication 1 ou 2, caractérisé en ce que le dispositif d'exhalaison (15) est disposé latéralement par rapport au compartiment dde cuisson (2).

4. Four de boulanger selon la revendication 1, 2 ou 3, caractérisé en ce que le dispositif d'exhalaison (15) s'étend sur une grande partie de la hauteur du compartiment de cuisson (2).

5. Four de boulanger selon une des revendications 1 à 4, caractérisé en ce que le dispositif d'exhalaison (15) comporte une plaque établie parallèle à la paroi du compartiment de cuisson, et sur laquelle plusieurs rigoles (38) pour l'eau sont disposées en plan incliné, et en ce que cette plaque (37), à son côté de devant et à son côté de dos, est balayée par l'air qui est amené par l'orifice d'aspiration (30).

6. Four de boulanger selon une des revendications 1 à 5, caractérisé en ce qu'un conduit de fumée (41), est applique contre un côté du dispositif d'exhalaison (15), de préférence contre le côte élongné par rapport au compartiment de cuisson (2), ce conduit de fumée allant du moyen de chauffage (16) vers le bas jusqu'à un orifice d'évacuation de fumée (42), disposé à la hauteur de la zone inférieure du dispositif d'exhalaison (15), et de préférence au point le plus bas de ce dispositif.

7. Four de boulanger selon la revendication 6, caractérisé en ce que le conduit de fumée (41) s'étand en décrivant des méandres le long de la plaque (37) du dispositif d'exhalaison (15).

8. Four de boulanger selon la revendication 6 ou 7, caractérisé en ce qu'un canal (48), obturable au moyen d'un organe d'obturation (47), est embranché à partir du canal de retour (31), de préférence à l'orifice d'aspiration (30) ou peu aprés cet orifice, et débouche dans le conduit de fumée (41), de préférence en un point éloigné de l'orifice d'évacuation de fumée (42).

9. Four de boulanger selon la revendication 8, caractérisé en ce que dans le point d'embranchement, il est prévu comme organe d'obturation (47) un clapet asservi par contre-poids.

10. Four de boulanger selon une des revendications 1 à 9, caractérisé en ce que la paroi couvercle (10) du compartiment de cuisson (2) est obturée étanche.

**Claims**

1. Baking oven having a baking space (2) accessible through a door, into which a vehicle (6) can be brought, carrying the baking products and being stationary during the baking process, with two air channels (12) passing through at the side of the baking space (2) to its two sides via the effective space height, each air channel being seprated from the baking space (2) by intermediate wall (11) provided with a plurality of air openings (13), which air channels (12) during the baking process are supplied by a blower (14) by means of a change-over device (25) alternatively with hot air, which is warmed by a heater (16) and moistened by a misting device (15), flows through the baking space (2) transversely in alternating direction and thereafter is drawn back again cyclically to the suction side of the blower (14), whereby the blower (14) and the heater (16) are arranged higher than the baking space (2) and at least partially above it, characterized in that, for the removal of the air emerging from the baking space (2), below in the baking space (2) a suction opening (30) is arranged, through which the air flowing to the suction side of the blower (14) in a return current channel (31) arrives at the misting device (15) arranged at the height of the baking space (2), and in that the return current channel (31) leads from the misting device (15) via the heater (16), arranged higher than this, to the blower (14).

2. Baking oven according to claim 1, characterized in that the suction opening (30) is arranged at the deepest point of the baking space (2).

3. Baking oven according to claim 1 or 2, characterized in that the misting device (15) is arranged at the side of the baking space (2).

4. Baking oven according to claim 1, 2 or 3, characterized in that the misting device (15) reaches over a large part of the height of the baking space (2).

5. Baking oven according to one of claims 1 to 4, characterized in that the misting device (15) has a plate (37) arranged parallel to the baking space wall, on which plate several grooves (38) for water are arranged, extending in an inclined manner, and in that air supplied through the suction opening (30) flows around this plate (37) on its front and rear side.

6. Baking oven according to one of claims 1 to 5, characterized in that on one side of the misting device (15), preferably on the side directed away from the baking space (2), there rests a smoke gas channel (41), which leads from the heater (16) downwards to a smoke gas removal opening (42) arranged on the height of the lowest region of the misting device (15), preferably at its deepest point.

7. Baking oven according to claim 6, characterized in that the smoke gas channel (41) extends in a meandering manner along the plate (37) of the misting device (15).

8. Baking oven according to claim 6 or 7, chracterized in that from the return current channel (31), preferably in or shortly after the suction opening (30), a channel (48) which can be closed by a closing element (47) branches, the channel opening out into the smoke gas channel (41), preferably at a point removed from the smoke gas removal opening (42).

9. Baking oven according to claim 8, characterized in that in the branching point there is arranged a weighted shutter as closing element (47).

10. Baking oven according to one of claims 1 to 9, characterized in that the covering wall (10) of the baking space (2) is tightly closed.

FIG. 1

FIG. 5

FIG. 4

FIG. 2

FIG. 3

EP 0 302 067 B1